# EUROPEAN PATENT APPLICATION

(11) **EP 2 194 668 A2**
(43) Date of publication of application: **09.06.2010**
(21) Application number: 09177463.8
(22) Date of filing: 30.11.2009
(51) Int. Cl.: H04L 1/00

(54) **Apparatus and method for generating frame for mpe-fec decoding**

(30) Priority: 03.12.2008 KR 20080122060; 07.05.2009 KR 20090039865
(71) Applicant: Electronics and Telecommunications Research Institute, Daejeon 305-350 (KR)
(72) Inventor: Shin, Min Su, 305-770, Daejeon (KR); Chang, Dae Ig, 302-280, Daejeon (KR); Lee, Ho Jin, 305-761, Daejeon (KR)
(74) Representative: Esslinger, Alexander

(57) **Abstract**

An apparatus and method for generating frames for MPE-FEC decoding are disclosed. The apparatus for generating frames for MPE-FEC decoding includes: a packet reception unit configured to receive a packet; a packet attribute inspection unit configured to inspect whether or not the received packet forms a header part of a section; and a frame generation unit configured to generate a frame according to different methods depending on whether or not the packet forms a header part of a section.

## Description

### CROSS-REFERENCE TO RELATED APPLICATIONS

This application claims the priorities of Korean Patent Application Nos. 10-2008-0122060 filed on December 3, 2008, and 10-2009-0039865 filed on May 7, 2009 in the Korean Intellectual Property Office, the disclosures of which are incorporated herein by reference.

### BACKGROUND OF THE INVENTION

### Field of the Invention

The present invention relates to an apparatus and method for generating frames for multi-protocol encapsulation-forward error correction (MPE-FEC) decoding and, more particularly, to an apparatus and method capable of effectively improving an erasure information table (EIT) generation method and a reconfiguration of MPE-FEC frames required for performing MPE-FEC decoding in a system providing an MPE-FEC function aiming to solve a problem of signal degradation at a short interval due to an abrupt channel change when a satellite or ground radio signal is received in a mobile environment.

### Description of the Related Art

In general, an MPE-FEC technique is a technique proposed as a digital video broadcasting-handheld (DVB-H) standard in Europe to provide a digital broadcast service to subscribers who use handheld-type terminals. In detail, broadcast data is segmented into a plurality of packet data each having the same packet ID (PIDD) so as to be transmitted, and Reed-Solomon (RS) encoding is used as an FEC scheme to protect transmitted data.

The MPE-FEC technique provides an FEC function in a link layer in addition to the FEC function used in a physical layer, which has been introduced to improve robustness with respect to impulse interference and Doppler effect in a mobile channel environment to lead to an improvement in a reception C/N performance. The use of the MPE-FEC technique guarantees the integrity of a transmitted IP stream even in an environment in which a 10% packet loss is made.

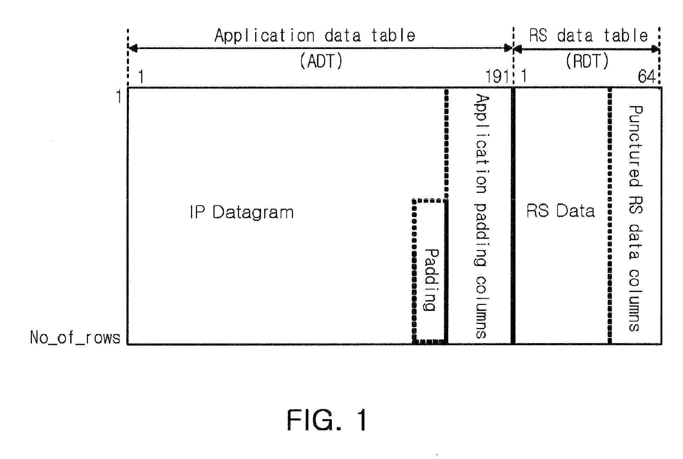

FIG. 1 shows the structure of an MPE-FEC frame.

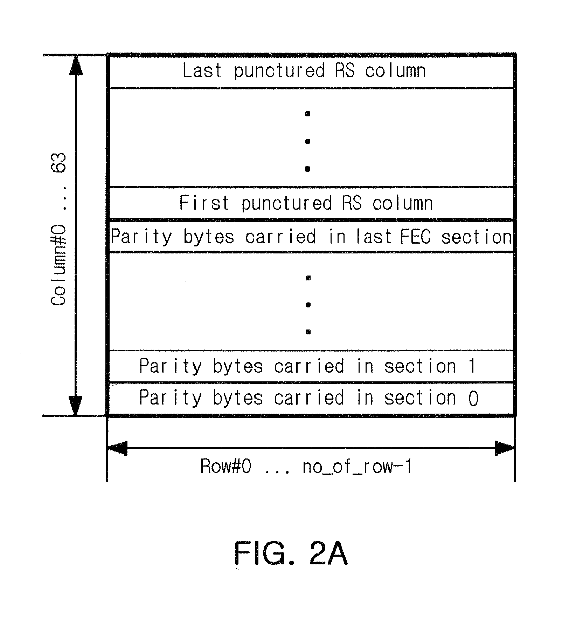

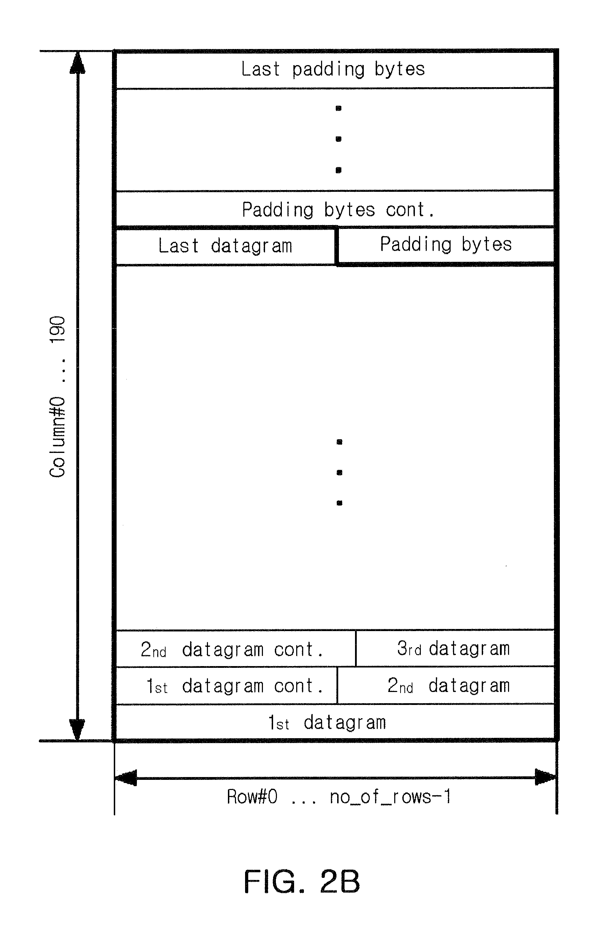

The MPE-FEC frame may have a maximum size of 1024 bytes (row) x 255 bytes (column). Here, the length, or row, corresponds to the No of rows in FIG. 1, and the length of 1, 256 bytes, 512 bytes, 768 bytes, or 1024 bytes may be selectively used as the length of row. Information about these values provided to a receiver via a separately transmitted Time Slice and FEC identifier descriptor. In the 255 bytes (column) of the MPE-FEC frame, data corresponding to 191 columns is filled with an input IP datagram, which is called an application data table (ADT), and the other remaining 64 columns are filled with 64 bytes as a result of a value obtained by performing RS encoding on the 191 bytes of each row, which is called an RS data table (RDT). When the RS encoding on the entire rows is finished, to complete the MPE-FEC frame of No_of_row x 255 bytes, the MPE section is configured in units of the first received IP datagram for the ADT part and outputted, and an MPE-FEC section is configured for each row for the RDT part and outputted. FIGS. 2A and 2B illustrate the ADT and RDT configuration method.

Each data constituting the MPE-FEC frame is converted into the MPE section or MPE-FEC section and finally segmented into MPEG-2 TS packets, which are then outputted.

An MPE-FEC decoder of the receiver receives the data transmitted in units of the MPEG-2 TS packets, performs the same processing scheme on the data in a reverse direction, performs error correction on the reconfigured MPE-FEC frame by employing an RS decoding method using a deletion function, and outputs only the IP datagram of the ADT part.

A processing flow in the related art receiver is as follows. The MPE-2 TS packet is received and recombined into an MPE section or MPE-FEC section. When the section is normally recombined so a CRC 32 value is consistent, only a payload part excluding a section header, is stored in a corresponding position of the MPE-FEC frame, while data having an error according to the calculation of CRC 32 value is discarded. The discarded data is indicated in an erasure information table (EIT).

However, even if only one of the MPEG-2 packets has an error, the entire section data is to be discarded. Also, the EIT indicating the discarded data is used as erasure information in an RS decoder, and in this case, if a maximum error correction capability of the RS decoder is exceeded, the RS decoder fails to correct an error, outputting reception data as it is.

Thus, in order to avoid such problems, it is important to minimize the amount of data to be recognized as an error in the process of reconfiguring the MPE-FEC frame and generating the EIT so as not to exceed the error correction capability of the RS decoder. In the related art, a single section is configured as the IP datagram. Thus, on the assumption that a single section has a maximum length of 1,500 bytes, if one 188-byte MPEG-2 TS packet has an error, 1,500 bytes are bound to be discarded.

### SUMMARY OF THE INVENTION

An aspect of the present invention provides an apparatus and method for generating frames for multi-protocol encapsulation-forward error correction (MPE-FEC) decoding capable of effectively utilizing the performance of an MPE-FEC decoder at its maximum level by reconfiguring an MPE-FEC frame and generating an erasure information table (EIT) in units of MPEG-2 TS packets in a receiver, rather than performing them in units of sections such as in the related art. Accordingly, the influence of an error generated in a channel can be minimized to thus ensure robust characteristics in a signal degradation condition anticipated in a mobile environment.

According to an aspect of the present invention, there is provided an apparatus for generating a frame for MPE-FEC decoding, the apparatus including: a packet reception unit configured to receive a packet; a packet attribute inspection unit configured to inspect whether or not the received packet forms a header part of a section; and a frame generation unit configured to generate a frame according to different methods depending on whether or not the packet forms a header part of a section.

The frame generation unit may include: a packet error inspection unit configured to perform packet error inspection; a section flag determination unit configured to inspect whether or not a section flag has been set as a configuration proceeding state; and a frame storage unit configured to store a CC value, store a section payload in an MPE-FEC frame, and set a corresponding position of an EIT in a no-error state, wherein if the packet forms a header part of a section, the packet error inspection unit inspects whether or not the packet has an error, and if the packet does not have an error, the section flag determination unit sets the section flag as a configuration proceeding state and transmits the packet to the frame storage unit, whereas if the packet does not form a header part of the section, the section flag determination unit inspects whether or not the section flag has been set as the configuration proceeding state, and if the section flag has been set as the configuration proceeding state, the packet error inspection unit performs packet error inspection, and if the packet does not have an error, the packet error detection unit transmits the packet to the frame storage unit.

In the frame generation apparatus, if the section flag determination unit determines that the section flag has been set as a configuration termination state or if the packet error inspection unit determines that the packet has an error, the packet is discarded, and a new packet is received from the packet reception unit.

The frame generation apparatus may further include: a section termination unit configured to terminate an operation, in units of configured sections, with respect to the frame generated by the frame generation unit; and a frame termination unit configured to terminate an operation, in units of configured frames, with respect to the frame generated by the frame generation unit.

If processing of a currently configured section is finished, the section termination unit may set the section flag as the configuration termination state.

If processing of a currently configured frame is finished, the frame termination unit performs RS decoding.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 illustrates the structure of a multi-protocol encapsulation-forward error correction (MPE-FEC) frame;

FIGS. 2A and 2B illustrate ADT and RDT configuration schemes, respectively;

FIG. 3 is a flow chart illustrating an overall process of a method for generating frames for MPE-FEC decoding according to one exemplary embodiment of the present invention; and

FIG. 4 is a schematic block diagram of an apparatus for generating frames for MPE-FEC decoding according to another exemplary embodiment of the present invention.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

It will be understood that when an element is referred to as being "connected with" another element, it can be directly connected with the other element or intervening elements may also be present. In contrast, when an element is referred to as being "directly connected with" another element, there are no intervening elements present. In addition, unless explicitly described to the contrary, the word "comprise" and variations such as "comprises" or "comprising, " will be understood to imply the inclusion of stated elements but not the exclusion of any other elements.

First, before performing an overall processing procedure, a memory initialization process needs to be performed to process data.

A multi-protocol encapsulation-forward error correction (MPE-FEC) frame is initialized as 0. In this respect, a portion from an MPE section indicated as a table boundary to 191 columns in an application data table (ADT) is regarded as padding columns, and a next process is performed, without storing data in the portion, to satisfy a zero-byte padding regulation. Thus, value 0 is filled in punctured columns of an RS data table (RDT) to configure the MPE-FEC frame.

An erasure information table (EIT) is initialized as 1 (error presence state). Erasure information is recorded in the EIT and, in this case, if an erroneous byte is recorded as 1 while an error-free byte is recorded as 0. If a section header has an error, the position of a corresponding section in the MPE-FEC frame cannot be checked, so it is not possible to indicate an accurate erasure value. Thus, after the EIT is initialized as 1, the method of updating only error-free packets as 0 is used, based on which portions which have not been updated are determined to be erroneous packets.

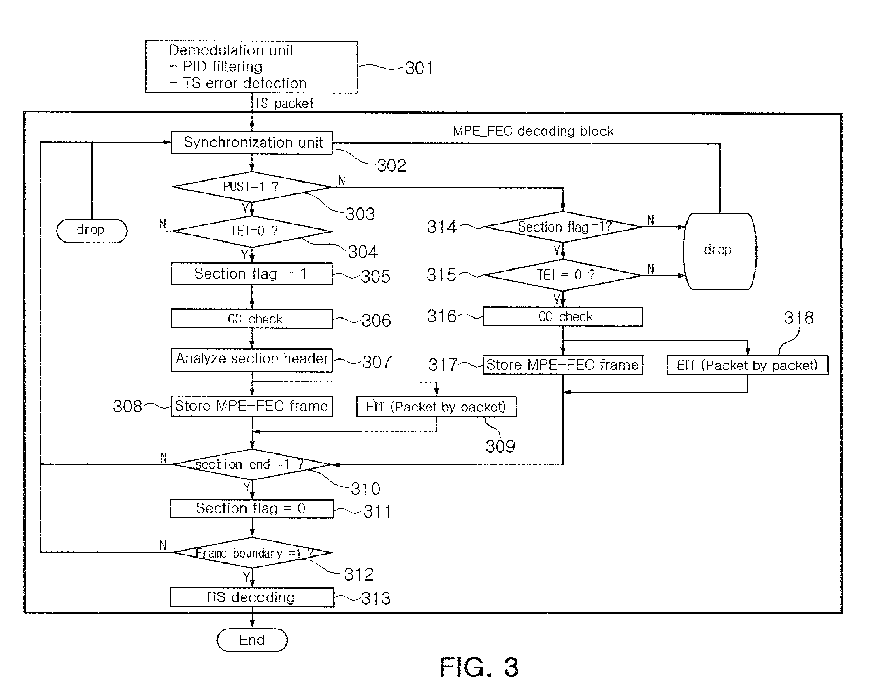

FIG. 3 is a flow chart illustrating an overall process after the memory initialization process in the method for generating frames for MPE-FEC decoding according to one exemplary embodiment of the present invention.

Data received in step 301 is PID (Packet ID)-filtered and whether or not the data has an error is detected by TS packet. Input TS packets are limited to only those for an IP service, so it is assumed that the input TS packets have the same PID. Accordingly, the input packets have the same PID and a continuity counter (CC) value of a TS packet header increases 1 at a time (which starts from 0 as a maximum value). Such CC value is used to find the position within the MPE-FEC frame without having to reconfigure a section afterwards. After the PID filtering, for an erroneous TS packet according to the results of error detection (TEI checking) performed in units of TS packets, a transport error indicator (TEI) field is set as 1.

In step 302, a synchronization process is performed to receive a packet in synchronization with each TS packet.

In step 303, a payload unit start indicator (PUSI) field of the TS packet header is inspected. If the TS packet forms a section header part (PUSI=1), step 304 is performed, or otherwise (PUSI=0), step 314 is performed.

In step 304, a TEI field value of the corresponding packet is inspected, and if the packet has an error (TEI=1), the corresponding TS packet is discarded, and step 302 is performed again. The input TS packets are inspected until such time as an error-free TS packet comes, and in this case, if a section header has an error, because the corresponding section is not EIT updated, the corresponding section is entirely erased.

In step 304, if the corresponding packet does not have an error (TEI=0), a section is started to be configured, and in step 305, a section flag value indicating that the configuration of section has started is set as 1 (configuration proceeding state) (the section flag value is used to check whether or not a section including a TS packet is being configured when the TS packet is received). Subsequently, in step 306, a CC value of the TS packet header is stored, and in step 307, a section header part of the corresponding TS packet is inspected. In step 308, a section payload part is stored at a data position within the MPE-FEC frame according to the section header information, and in step 309, the EIT value of the corresponding position is updated as 0.

The detailed procedure of storing the section payload in the MPE-FEC frame is as follows. A first 1 byte following a 4-byte TS header of a TS packet is a pointer field indicating the number of bytes up to a position at which a first byte of a section starts after TS header ends. Thus, if the pointer field is 0, it means that section header data starts immediately following a TS header+pointer field. Namely, if PUSI=1, the pointer field must be checked to extract section data.

After the data is stored in the MPE-FEC frame and the EIT is generated, steps 310 to 312 are performed to determine whether or not the section being currently configured has been completely processed or whether or not configuration of the MPE-FEC frame has been completed.

In step 310, whether or not the processing of the section has been finished, and if processing of the section being currently configured has not been finished (section end=0), step 302 is performed and configuration of the section continues.

If the processing of the section being currently configured is finished (section end=1) in step 310, a section flag is set as 0 in step 311.

In step 312, it is determined whether or not the configuration of the MPE-FEC frame has been completed. If the configuration of the MPE-FEC frame has been completed (frame boundary=1), RS decoding is performed in step 313. If the configuration of the MPE-FEC frame has not been completed yet (frame boundary=0), step 302 is performed again to continue configuring of the frame.

If the TS packet forms only a payload part (PUSI=0), not the header part of the section in step 303, step 314 is performed.

In step 314, a section flag value is checked to determine whether or not the section is currently being configured. If the section is currently in a configuration termination state (section flag=0), step 302 is performed until such time as a TS packet including the section header part is input.

In step 314, if the section is currently in the configuration proceeding state (section flag=1), step 315 is performed.

In step 315, it is inspected whether or not the TS packet has an error, and if the TS packet has an error (TEI=1), step 302 is performed. If the TS packet has no error (TEI=0), a CC value of the TS packet header is stored in step 316, a section payload part is stored at a data position within the MPE-FEC frame in step 317, and an EIT value at the corresponding position is then updated as 0. Subsequently, step 310 is performed.

In this case, a detailed process of storing the section payload in the MPE-FEC frame and a detail process of determining whether or not the currently configured section has been completely processed and whether or not the configuration of the MPE-FEC frame has been completed are as described above.

In this manner, the configuration of the MPE-FEC frame and EIT generation are performed by TS packets. Thus, if only a TS packet forming the payload, not the header of the section, has an error, only the erroneous TS packet, not the overall section, can be discarded, Accordingly, the amount of discarded data indicated in the EIT can be minimized, and because the error correction capability of the RS decoder is not exceeded, the performance of the MPE-FEC decoder can be effectively utilized to its maximum level. Thus, the influence of an error generated in a channel can be minimized, ensuring robust characteristics in a signal degradation condition anticipated in a mobile environment.

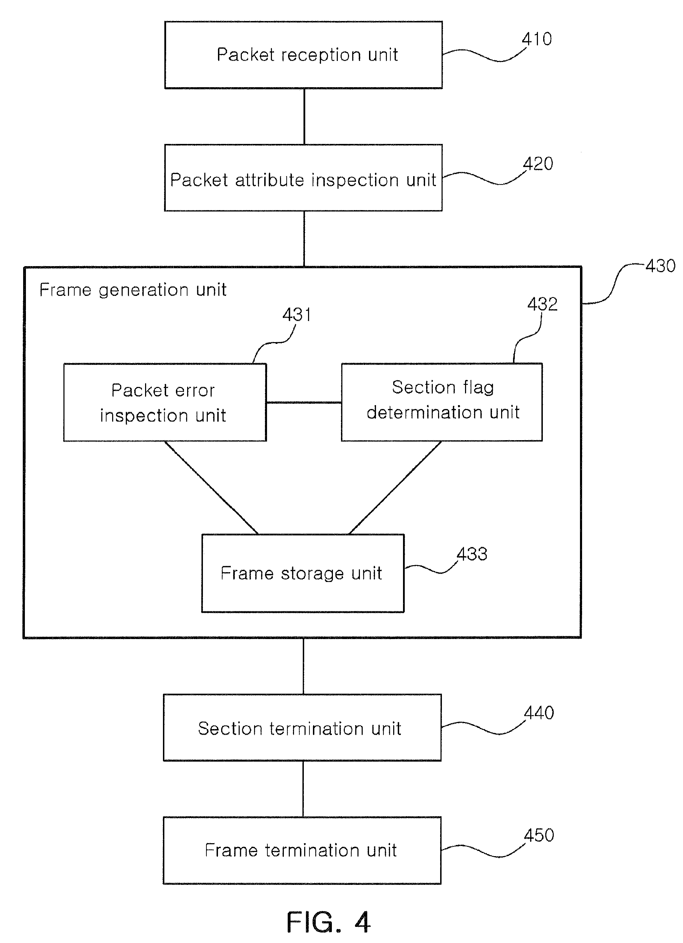

FIG. 4 is a schematic block diagram of an apparatus 400 for generating frames for MPE-FEC decoding according to another exemplary embodiment of the present invention.

In this embodiment, the frame generating apparatus 400 may include a packet reception unit 410, a packet attribute inspection unit 420, and a frame generation unit 430.

The packet reception unit 410 may receive a packet.

The packet attribute inspection unit 420 may inspect whether or not a packet received by the packet reception unit 410 forms a header part of a section.

The frame generation unit 430 may generate a frame according to different methods depending on whether or not the packet forms the header part of the section according to the results of inspection which has been performed by the packet attribute inspection unit 420.

In the present exemplary embodiment, the frame generation unit 430 may include a packet error inspection unit 431 that performs a packet error inspection, a section flag determination unit 432 that inspects whether or not a section flag has been set as a configuration proceeding state, and a frame storage unit 433 that stores a CC value, stores a section payload in the MPE-FEC frame, and sets a corresponding position of an EIT as an error-free state.

In the present exemplary embodiment, if the packet forms the header part of the section, the packet error inspection unit 431 first inspects whether or not the packet has an error. If the packet does not have an error, the section flag determination unit 432 may set the section flag as a configuration proceeding state and transmit the packet to the frame storage unit 433 to store the CC value, and the section payload may be stored in the MPE-FEC frame, and the corresponding position of the EIT may be set as an error-free state.

If the packet does not form the header part of the section, the section flag determination unit 431 inspects whether or not the section flag has been set as the configuration proceeding state. If the section flag has been set as the configuration proceeding state, the packet error inspection unit 432 performs packet error inspection. If the packet does not have an error, the packet error inspection unit 432 may transmit the packet to the frame storage unit 433 to store the CC value. And, the section payload may be stored in the MPE-FEC frame and a corresponding position of the EIT may be set as an error-free state.

In the frame generating apparatus 400 according to the present exemplary embodiment, when the section flag determination unit 432 determines that the section flag has been set as the configuration termination state, or when the packet error inspection unit 431 determines that the packet has an error, the packet may be discarded and the packet reception unit 410 may receive a new packet.

The frame generating apparatus according to the present exemplary embodiment of the present invention may further include a section termination unit 440 configured to terminate operation, in units of configured sections, with respect to a frame generated by the frame generation unit, and a frame termination unit 450 configured to terminate an operation, in units of configured frames, with respect to a frame generated by the frame generation unit.

When processing of the currently configured section is finished, the section termination unit 440 may set the section flag as the configuration termination state. If processing of the currently configured section has not been finished yet, the frame generating apparatus may receive a packet again.

When processing of the currently generated frame is finished, the frame termination unit 450 may perform RS decoding. If processing of the currently generated frame has not been finished yet, the frame generating apparatus may receive a packet again.

As set forth above, the apparatus and method for generating frames for MPE-FEC decoding according to exemplary embodiments of the invention reconfigures an MPE-FEC frame by MPET-2 TS packet, not by section, and generates an EIT, the amount of data indicated in the EIT can be minimized. Thus, the error correction capability of the RS decoder is not exceeded, and thus, the performance of the MPE-FEC decoder can be effectively utilized to its maximum level. Accordingly, the influence of an error generated in a channel can be minimized to thus ensure robust characteristics over a signal degradation condition anticipated in a mobile environment.

While the present invention has been shown and described in connection with the exemplary embodiments, it will be apparent to those skilled in the art that modifications and variations can be made without departing from the spirit and scope of the invention as defined by the appended claims.

## Claims

1. A method for generating frames for multi-protocol encapsulation-forward error correction (MPE-FEC) decoding, the method comprising:
receiving a packet;
a packet attribute inspection step of inspecting whether or not the received packet forms a header part of a section; and
a frame generation step of generating a frame according to different methods depending on whether or not the packet forms the header part of the section in the packet attribute inspection step.

2. The method of claim 1, wherein the frame generation step comprises:
if the packet forms the header part of the section,
a packet error inspection step of inspecting whether or not the packet has an error; and
if the packet does not have an error, a first frame storage step of setting a section flag as a configuration proceeding state, storing a CC value, storing a section payload in the MPE-FEC frame, and setting a corresponding position of erasure information table (EIT) as an error-free state.

3. The method of claim 2, wherein if the packet has an error in the packet error inspection step, the packet is discarded and a new packet is received.

4. The method of claim 1, wherein the frame generation step comprises:
if the packet does not form the header part of the section;
a section flag inspection step of inspecting whether or not the section flag has been set as the configuration proceeding state;
when the section flag has been set as the configuration proceeding state, a packet error inspection step of performing a packet error inspection; and
if the packet does not have an error, a second frame storage step of storing a CC value, storing the section payload in the MPE-FEC frame, and setting the corresponding position of the EIT as an error-free state.

5. The method of claim 4, wherein if the section flag has been set as a configuration termination state in the section flag inspection step, the packet is discarded and a new packet is received.

6. The method of claim 4, wherein if the packet has an error in the packet error inspection step, the packet is discarded and a new packet is received.

7. The method of one of claims 1 to 6, further comprising:
a section termination step of terminating the operation, in units of configured sections, with respect to the frame generated in the frame generation step; and
a frame termination step of terminating the operation, in units of configured frames, with respect to the frame generated in the frame generation step.

8. The method of claim 7, wherein, in the section termination step, if processing of the currently configured section has not been finished, a packet is received again, and if processing of the currently configured section has been finished, the section flag is set as the configuration termination state.

9. The method of claim 7, wherein, in the frame termination step, if processing of the currently generated frame has not been finished yet, a packet is received again, and if processing of the currently generated frame has been finished, RS decoding is performed.

10. An apparatus for generating a frame for MPE-FEC decoding, the apparatus comprising:
a packet reception unit configured to receive a packet;
a packet attribute inspection unit configured to inspect whether or not the received packet forms a header part of a section; and
a frame generation unit configured to generate a frame according to different methods depending on whether or not the packet forms a header part of a section.

11. The apparatus of claim 10, wherein the frame generation unit comprises:
a packet error inspection unit configured to perform packet error inspection;
a section flag determination unit configured to inspect whether or not a section flag has been set as a configuration proceeding state; and
a frame storage unit configured to store a CC value, store a section payload in an MPE-FEC frame, and set a corresponding position of an EIT in a no-error state,
wherein if the packet forms a header part of a section, the packet error inspection unit inspects whether or not the packet has an error, and if the packet does not have an error, the section flag determination unit sets the section flag as a configuration proceeding state and transmits the packet to the frame storage unit,
whereas if the packet does not form a header part of the section, the section flag determination unit inspects whether or not the section flag has been set as the configuration proceeding state, and if the section flag has been set as the configuration proceeding state, the packet error inspection unit performs packet error inspection, and if the packet does not have an error, the packet error detection unit transmits the packet to the frame storage unit.

12. The apparatus of claim 11, wherein if the section flag determination unit determines that the section flag has been set as a configuration termination state or if the packet error inspection unit determines that the packet has an error, the packet is discarded, and a new packet is received from the packet reception unit.

13. The apparatus of claim 10, 11 or 12, further comprising:
a section termination unit configured to terminate an operation, in units of configured sections, with respect to the frame generated by the frame generation unit; and
a frame termination unit configured to terminate an operation, in units of configured frames, with respect to the frame generated by the frame generation unit.

14. The apparatus of claim 13, wherein, if processing of a currently configured section is finished, the section termination unit may set the section flag as the configuration termination state.

15. The apparatus of claim 13, wherein if processing of a currently configured frame is finished, the frame termination unit performs RS decoding.
